# EUROPEAN PATENT SPECIFICATION

(11) **EP 3 870 871 B1**
(45) Date of publication and mention of the grant of the patent: **27.08.2025**
(21) Application number: 19795181.7
(22) Date of filing: 25.10.2019
(51) Int. Cl.: F16D 7/02, F16D 43/21, F16F 15/129

(54) **A TORQUE LIMITER WITH A LOAD DEVICE**
DREHMOMENTBEGRENZER MIT LASTVORRICHTUNG
LIMITEUR DE COUPLE À DISPOSITIF DE CHARGE

(30) Priority: 25.10.2018 TR 201815988
(43) Date of publication of application: 01.09.2021
(73) Proprietor: Valeo Otomotiv Sanayi ve Ticaret A.S., 34854 Istanbul (TR)
(72) Inventor: GÜRSES, Serkan, 95892 Cergy Pontoise (FR)
(86) International application number: PCT/EP2019/079297
(87) International publication number: WO 2020/084154

(56) References cited:
- EP-A2- 2 233 779
- WO-A1-2011/132270
- WO-A1-2011/132270
- WO-A1-2018/109129
- WO-A1-2018/109129
- DE-A1- 102017 115 902
- TR-A3- 201 711 531
- TR-A3- 201 711 531
- US-A- 3 596 740
- US-A- 3 596 740
- US-A- 6 026 710

## Description

### TECHNICAL FIELD

The invention concerns a torque limiter which limits the torque produced in an engine, particularly in vehicles with hybrid propulsion, in order to protect the system.

### PRIOR ART

In motor vehicles, the transmission of excessive torque to the gearbox results in damage to various transmission elements including gears. Torque limiting mechanisms are used in order to eliminate the aforementioned problem.

In some known solutions, the entire system is halted in order to prevent high torque inflicting damage on the mechanism. Another approach in the prior art is that when the torque reaches a predetermined level, slippage is effected by a friction element, for example, by a friction plate, in order to prevent the transmitted torque from exceeding the stated value. Torque limiters which operate in this fashion are known as slip torque limiters.

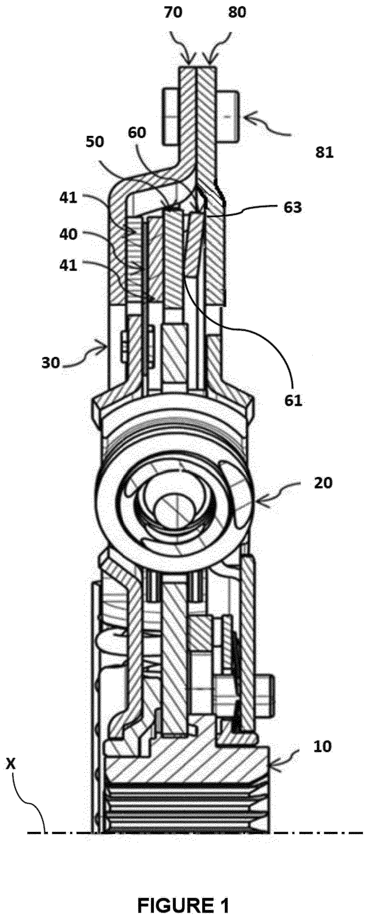

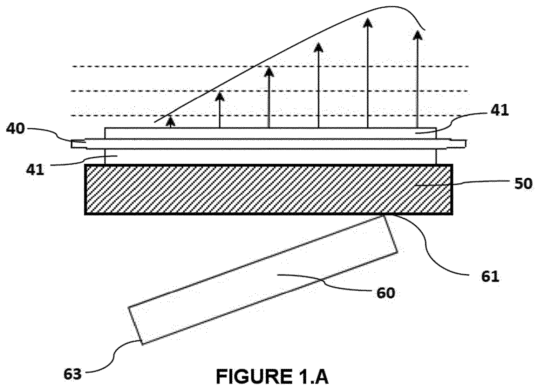

Figure 1 shows one example of an arrangement of a sliptype torque limiter. The structure basically consists of two covers (70, 80), a volume created between the two covers (70, 80), a drive plate (40) with one friction element (41) attached to each of the two faces within the said volume, and a pressure plate (50) in contact with the friction elements (41). A load device (60) selected as a Belleville-type diaphragm spring in contact with the other face of the said plate (50) generates pressure between the friction element (41) and the pressure plate (50) by applying pressure on the plate by means of a first fulcrum (61). It thus controls the value at which slippage will occur. A limiter which is an example of the said structure is set out in the Turkish Patent and Trademark Office document with application number TR 20170/11531.

The force provided through the first fulcrum (61) generates pressure between the surface of the pressure plate (50) and the friction element (41). The surface pressure graphics with reference to the positioning of the first fulcrum (61) may be seen in Figure 1.A. The pressure is at maximum value at the point at which the first fulcrum (61) makes contact, and this value declines progressively the further the distance from the first fulcrum (41).

The fact that the pressure on the pressure plate (50) is not homogeneous results in voids developing between the pressure plate (50) and the friction element (41). Ingress of water, sand and similar external agents into the said voids causes mechanical and chemical erosion in the areas concerned.

A torque fluctuation absorbing device is described in the European Patent Office (EPO) document, publication number EP1528283 (B1). The structure referred to exhibited the basic elements of the limiter described above but, with a view to improve the pressure distribution over the plate, it defined the width over which the frictional member contacts the plate as L, and the distance between the fulcrum of the Belleville-type diaphragm spring and termination of the width L as A. It was stated that the width A will need to vary between 30% and 70% of L in order to ensure appropriate pressure distribution.

Therefore, all of the above problems made it essential to introduce an innovation into the field concerned.

### THE PURPOSE OF THE INVENTION

The present invention is intended to eliminate the problems referred to above, and to introduce an innovation into the field concerned.

The purpose of the present invention is to provide a torque limiter structure which limits torque production in order to protect motor vehicle systems, especially in vehicles with hybrid drive motors.

Another purpose of the invention is to ensure that the pressure between the pressure plate and the friction elements is generated in a homogeneous fashion over the surface of the pressure plate.

A further purpose of the invention is to prevent the development of corrosion and adhesion in the part in question by preventing the ingress of external agents between the said plate and the friction elements.

Another purpose of the invention is to ensure a more balanced friction force between the pressure plate and the friction elements.

### BRIEF EXPLANATION OF THE INVENTION

In order to achieve all of the objectives arising from the above discussion and the detailed explanation below, the present invention is a torque limiter which is capable of turning on an axis of rotation (X) for use in motor vehicles in order to limit the torque transmitted from an engine to a gearbox, and comprising a first cover, a second cover attached to the first cover, a drive plate located axially between the first cover and the second cover, one of the first cover or the drive plate for attachment to the engine, the other of the first cover or the drive plate for attachment to the gearbox, a load device positioned axially between the first cover and the drive plate, a pressure plate positioned axially between the load device and the drive plate, at least one friction element positioned axially between the pressure plate and the drive plate. The load device comprises a first fulcrum and a second fulcrum which are in contact with the pressure plate and at least one support section between the first fulcrum and the second fulcrum which applies force to the first cover, and the first fulcrum and the second fulcrum are radially distanced from one another.

The torque limiter may comprise at least one of the following features.

In a preferred embodiment, the at least one support section (63) is arranged radially between the first fulcrum (61) and the second fulcrum (62).

In a preferred embodiment, the at least one support section (63) is arranged radially between the first fulcrum (61) and the second fulcrum (62) all around the axis of rotation (X).

In a preferred embodiment of the invention, the first fulcrum and the second fulcrum are circumferential in configuration.

In a preferred embodiment of the invention, the first fulcrum and/or the second fulcrum have a circular shape around the axis of rotation.

In another preferred embodiment of the invention, the first fulcrum is provided circumferentially in a non-continuous configuration.

In another preferred embodiment of the invention, the second fulcrum is provided circumferentially in a non-continuous configuration.

In another preferred embodiment of the invention, the section between the support section of the load device and the first fulcrum is provided in the form of a Belleville spring.

In another preferred embodiment of the invention, the section between the support section of the load device and the second fulcrum is provided in the form of a Belleville spring.

In another preferred embodiment of the invention, the load device comprises two Belleville springs.

In another preferred embodiment of the invention; there is an axial overlapping between the first and second Belleville springs.

In a preferred embodiment, the first fulcrum and a first support section are arranged on the first Belleville spring, and the second fulcrum and a second support section are arranged on the second Belleville spring.

In a preferred embodiment, a radial support distance between the first and second support sections of the first spring and the second spring being less than a radial distance between the first fulcrum and the second fulcrum.

In another preferred embodiment of the invention, the support sections of the first spring and the second spring are provided circumferentially in a non-continuous form, and the support sections fit together.

In a preferred embodiment, the support sections of the first spring have a first group of teeth arranged circumferentially around the axis of rotation, and the second spring have a second group of teeth arranged circumferentially around the axis of rotation, each teeth of the first group of teeth being arranged circumferentially between two teeth of the second group of teeth.

In another preferred embodiment of the invention, a support section which is circumferential in form, extending radially.

In another preferred embodiment of the invention, the support section is circumferential in form, extending radially.

In another preferred embodiment of the invention, the load device, the support section, the first fulcrum, and the second fulcrum are monolithic in structure, and the section of the support section which comes into contact with the first cover is provided in flattened form.

In another preferred embodiment of the invention, the friction element is provided circumferentially.

In another preferred embodiment, the first fulcrum is provided at the inner circumference of the load device, a first distance being defined between the internal circumference of the friction element and the first fulcrum, and a friction surface with being defined between the internal circumference of the friction element and the external circumference of the friction element, and the ratio of the first distance to the friction surface width being equal to or less than 0.2.

In another preferred embodiment of the invention, the second fulcrum is provided on the external circumference of the load device, a second distance being defined between the external circumference of the friction element and the second fulcrum, and a friction surface width being defined between the internal circumference of the friction element and the external circumference of the friction element and the ratio of the second distance to the width of the friction surface being equal to or less than 0.2.

In another preferred embodiment of the invention, a radial distance is defined between the first fulcrum and the second fulcrum, a circumferential friction element is provided, and a friction surface width being defined between the internal circumference of the friction element and the external circumference of the friction element, and the ratio of the radial distance to the friction surface with being equal to or greater than 0.7.

In another preferred embodiment of the invention, the first or second cover shall be provided in the form of a flywheel.

In a preferred embodiment of the invention, the said fulcrums are configured so that they each apply pressure at different points.

In a preferred embodiment of the invention, the said fulcrums are positioned in such a way as to provide pressure on a plate.

In a preferred embodiment of the invention, the said fulcrums are provided by at least one load device.

In a preferred embodiment of the invention, the said load device is V-shaped or U-shaped and comprises a first fulcrum.

In another preferred embodiment of the invention, it comprises at least two load devices each equipped with a first fulcrum in order to apply force on the plate from different points.

In a preferred embodiment of the invention, the said load elements are positioned so that their respective inclinations are similarly oriented.

In a preferred embodiment of the invention, they are positioned so that their respective inclinations are oppositely oriented.

In a preferred embodiment of the invention, the said load elements are Belleville springs.

In another preferred embodiment of the invention, it comprises two covers which are joined to each other, a circular drive plate located in the volume between the said covers with at least one friction pad on each of its two surfaces, and a V-shaped or U-shaped Belleville-type diaphragm spring equipped with two fulcrums in order to apply force on the plate from different points, in order that the amount of torque transferred from the engine is limited due to the friction force between the friction pads.

In a preferred embodiment, Belleville spring is a coneddisc spring.

In another embodiment, an elastic washer can take the place of the Belleville spring.

First cover and second cover may be designed in one part.

### BRIEF EXPLANATION OF THE FIGURES

In Figure 1 a section view is provided of a torque limiter according to the present state of the art.
Figure 1.A provides a simplified section view showing the relationship of the spring disc-plate-friction pad of the torque limiter in Figure 1, and a graphic of the surface pressure generated between the plate and the friction element by the said relationship.
In Figure 2 a section view is provided, representing an embodiment of the torque limiter which is the subject of the invention.

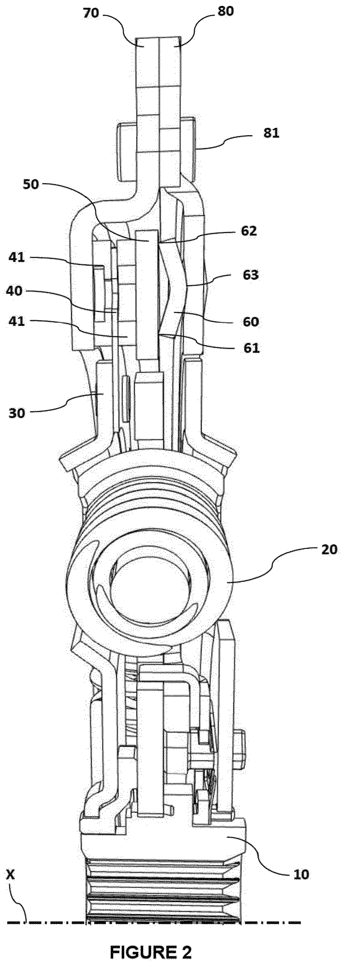

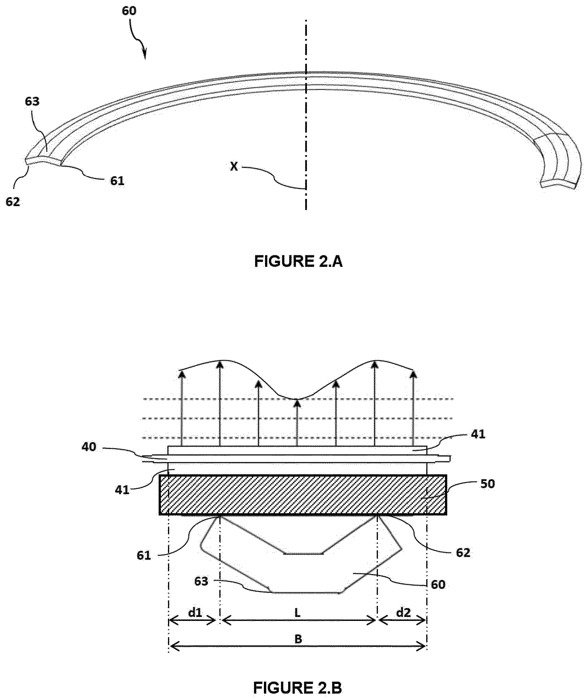

Figure 2.A an isometric view of the load device for the embodiment of the torque limiter shown in Figure 2..
Figure 2.B provides a simplified section view representing the relationship of the load device-pressure plate-friction element of a preferred embodiment of the torque limiter, and a graphic of the surface pressure generated between the pressure plate and the friction element by the said relationship.

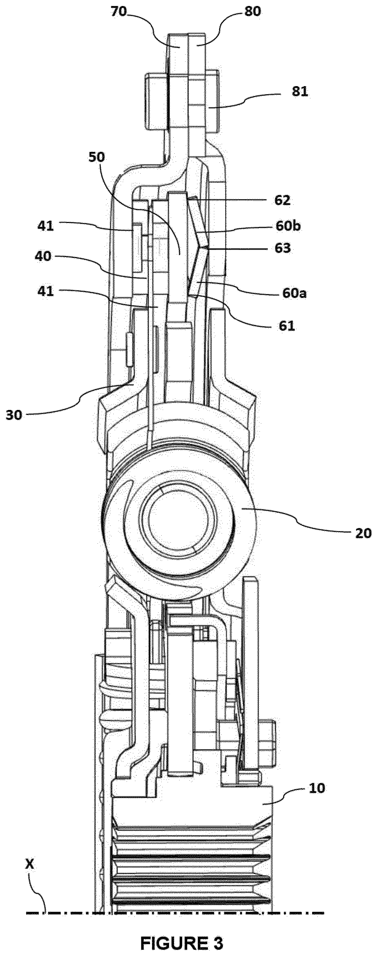

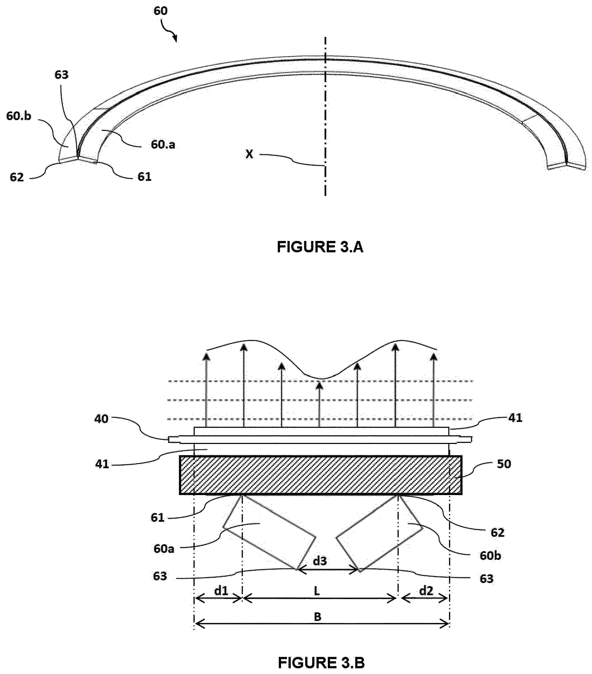

Figure 3 provides a section view representing another embodiment of the torque limiter which is the subject of the invention.
Figure 3.A provides an isometric view of the load device for the embodiment of the torque limiter shown in Figure 3.
Figure 3.B provides a simplified section view of the embodiment of the torque limiter shown in Figure 3, representing the relationship of the load device-plate-friction element, and a graphic of the surface pressure generated between the pressure plate and the friction element by the said relationship.

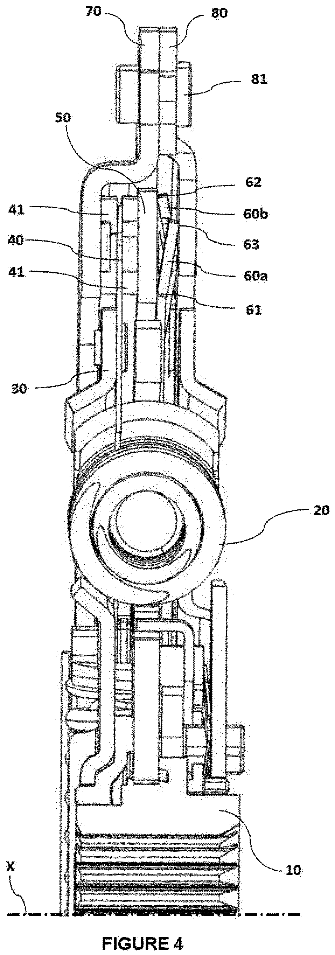

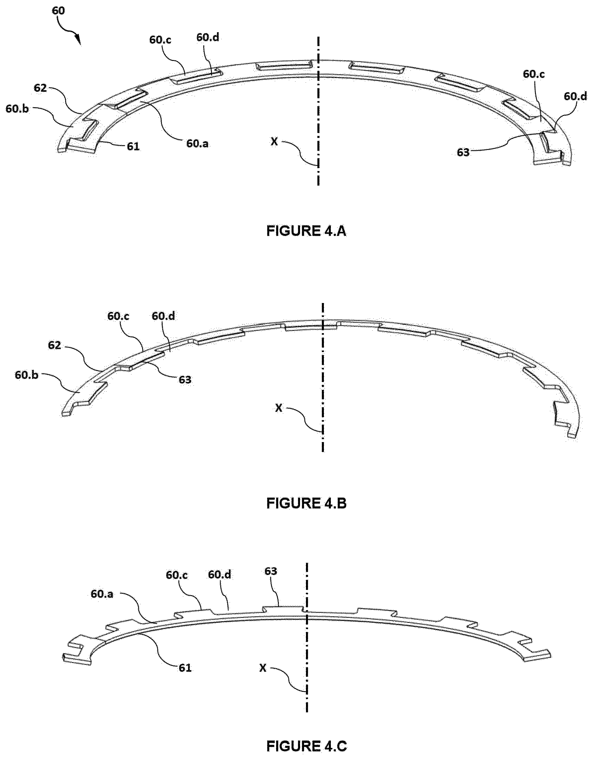

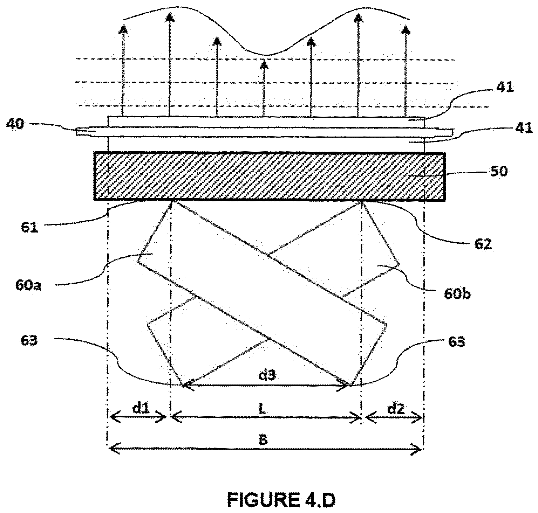

Figure 4 provides a section view representing another embodiment of the torque limiter which is the subject of the invention.
Figure 4.A provides an isometric view of the load device for the embodiment of the torque limiter shown in Figure 4.
Figure 4.B provides an isometric view of a part of the second spring for the load device for the embodiment of the torque limiter shown in Figure 4.
Figure 4.C provides an isometric view of a part of the first spring for the load device for the embodiment of the torque limiter shown in Figure 4.
Figure 4.D provides a simplified section view of the torque limiter shown in Figure 4, representing the relationship of the load device-pressure plate-friction element of the embodiment, and a graphic of the surface pressure generated between the pressure plate and the friction element by the said relationship.

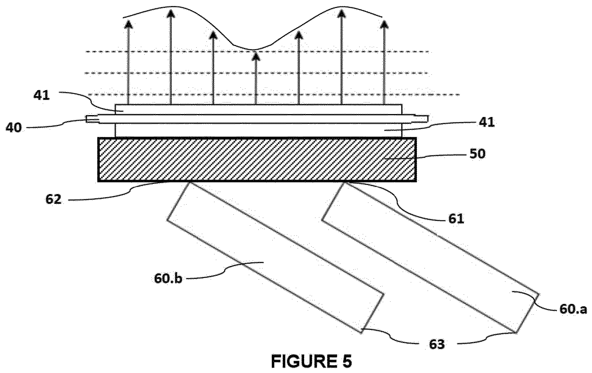

Figure 5 provides a simplified section view of another embodiment of the torque limiter , representing the relationship of the load device-pressure plate-friction element, and a graphic of the surface pressure generated between the pressure plate and the friction element by the said relationship.

### KEY TO THE REFERENCE NUMBERS ON THE FIGURES

- **1.**: Torque limiter
**10.** Hub
**20.** Damper element
**30.** Central plate
**40.** Drive plate
**41.** Friction element
**50.** Plate
**60.** Load device
**60a.** First spring
**60b.** Second spring
**61.** First fulcrum
**62.** Second fulcrum
**63.** Support section
**70.** First cover
**80.** Second cover
**81.** Rivet
**X.** Turning axis
**B.** Friction surface width
**L.** Radial distance
**d1.** First distance
**d2.** Second distance
**d3.** Support distance

### DETAILED EXPLANATION OF THE INVENTION

In this detailed explanation, the torque limiter (1) which is the subject of the invention is described using examples provided in order to clarify the matter but which shall be in no way restrictive in their effect.

The subject of the invention concerns a torque limiter (1) positioned on an axis of rotation (X) which limits the torque produced in an engine in order to protect the system in motor vehicles and particularly in vehicles with hybrid propulsion.

In Figure 2 a section view is provided, representing the torque limiter (1) which is the subject of the invention in its primary embodiment. The torque limiter (1) which is the subject of the invention comprises a first cover (70) and a second cover (80) connected by means of rivets (81). There is a drive plate (40) located axially between the first cover (70) and the second cover (80). In a preferred application in the art, the first cover (70) and the second cover (80) are adapted for connection to the engine by means of a flywheel. The drive plate (40) is adapted for connection to the input shaft of the gearbox. A load device (60) is positioned axially between the first cover (70) and the drive plate (40). A pressure plate (50) is positioned axially between the load device (60) and the drive plate (40). At least one friction element (41) is positioned between the pressure plate (50) and the drive plate (40). Preferably, at least one friction element (41) is attached to each axial surface of the drive plate (40). The load device (60) comprises a first fulcrum (61) and a second fulcrum (62) in contact with the pressure plate (50). There is at least one support section (63) between the first fulcrum (61) and the second fulcrum (62) which applies force to the first cover (70). The first fulcrum (61) and the second fulcrum (62) are radially distanced from one another.

The expression 'load device' (60) expresses an element which, under a specified pressure, may exhibit the characteristics of a spring, and in embodiments explained in this document, a Belleville spring can preferably been used.

In the structure indicated in Figure 2, in order to transmit power coming from the engine to the gearbox, a hub (10) is positioned in the exact centre of the torque limiter (1), being positioned to turn around an axis of rotation (X), and a hub plate around the said hub (10) is connected by means of splines around the said hub (10). Parallel to the said hub plate, two central plates (30) have been positioned. The damping elements (20) (preferably at least four horizontal springs) have been positioned on the central plate (30). Around the circumference of the central plate (30), the first cover (70) and the second cover (80) are fixed by means of rivets (81) through holes therein. Drive plate 40 is fixed to the central plate 30. In an other embodiment not shown, one of the central plate could be used directly as a drive plate.

In an alternative embodiment of the invention there is a drive plate (40) and friction elements (41) known as friction pads attached preferably to two surfaces of the said drive plate (40) in the volume formed between the first cover (70) and the second cover (80). A pressure plate (50) is attached in such a manner that it cannot rotate relative to the first cover (70) or the second cover (70), but can move axially. The pressure plate (50) is positioned to one side of the friction element (41). A pretensioned force on the friction elements (41) is provided over the pressure plate (50) by means of a load device (60). The friction elements (41) apply pressure to the pressure plate (50) continuously and when torque transmitted via the drive plate (40) exceeds the torque limit, exceedance of the specified torque transmission value is prevented by ensuring slippage between the friction element (41) of the drive plate (40) and the pressure plate (50).

The pressure force provided by the load device (60) generates a pressure between the pressure plate (50) in contact with the friction elements (41) and the second cover (80). As a result of this, a degree of friction is generated.

In the torque limiters (1) which are the subject of the invention the said force supplied by means of the load device (60) is transferred via the first fulcrum (61) provided on the internal circumference of the load device (60) and the second fulcrum (62) provided on the external circumference of the load device (60) and which are in contact with the pressure plate (50). The said first fulcrum (61) and the second fulcrum (62) transfer the force provided via the load device (60), ensuring that pressure is generated in a more balanced manner on the contact surface between the pressure plate (50) and the friction element (41).

In a preferred embodiment of the invention, the said first fulcrum (61) and the second fulcrum (62) are positioned in such a way as to transfer the pressure force to the pressure plate (50).

In another preferred embodiment of the invention, the said first fulcrum (61) and second fulcrum (62) are provided by at least one load device (60). In this case the said first fulcrum (61) and second fulcrum (62) are formed directly on the load device (60). The embodiment in question is shown in Figure 2, 2.A and 2.B.

Figure 2.B and Figure 2 provide a simplified section view of the torque limiter (1) described in the primary embodiment of the invention showing the load device (60)-pressure plate (50)-friction element (41) relationship, and a graphic of the surface pressure generated between the pressure plate (50) and the friction element (41) by the said relationship.

In the structure concerned, the first fulcrum (61) and the second fulcrum (62) are provided at either end of a load device (60) in a form resembling a "V" or "U." The first fulcrum (61) and second fulcrum (62) of the V-shaped load device (60) apply a force over various points of the pressure plate (50), and the said force generates pressure between the friction element (41) and the pressure plate (50).

The distance between the internal circumference and the external circumference of the friction element (41) shown in Figures 2.B, 3.B and 4.D has been defined as the friction surface width (B). The radial distance between the first fulcrum (61) and the second fulcrum (62) has been defined as the first radial distance (L). The radial distance between the internal circumference and the first fulcrum (61) of the friction element (41) has been defined as the first distance (d1). The radial distance between the external circumference and the second fulcrum (62) of the friction element (41) has been defined as the second distance (d2). Because the ratio of the first radial distance (L) to the friction surface width (B) is equal to or greater than 0.7, the first fulcrum (61) and the second fulcrum (62) are close to the internal and external circumference of the pressure plate (50). Alternatively, the ratio of the first distance (d1) to the first radial distance (L) is equal to or smaller than 0.2. Similarly, the ratio of the second distance (d2) to the first radial distance (L) is equal to or smaller than 0.2. The pressure force will be close to the internal and external circumference of the friction element (41) and therefore the ingress of water and foreign objects between the friction surface (41) and the pressure plate (50) is prevented. In the structure concerned, pressure distribution is generated in the form of a more regular curve as expressed by the representational pressure lines than the pressure distribution curve formed in the prior art as shown in Figure 1.A, and this shows that the pressure force is distributed more homogeneously. The pressure in Figure 1.A declines the further the distance from the first fulcrum (61) at which the pressure is established. In the embodiment which is the subject of the invention, the pressure force is transmitted by means of the first fulcrum (61) and the second fulcrum (62) from different points, which ensures that forces are applied at all points at values equal or similar to the values applied at the points at which the first fulcrum (61) and second fulcrum (62) apply pressure in the areas of low pressure which developed as shown in Figure 1.A. In this way the ingress of external agents between the said pressure plate (50) and/or the second cover (80) and the friction element (41) is prevented.

Figure 3 provides a representational section view of a second embodiment of the torque limiter (1). As may be seen in this embodiment, the load device (60) may comprise multiple load elements, each configured in order to produce at least one fulcrum. The load device (60) may be provided with two load elements selected as a first spring (60a) and a second spring (60b).

In this embodiment, the load device (60) as shown in Figure 3.A comprises two springs, a first spring (60a) and a second spring (60b), and the force providing the said pressure is supplied by this first spring (60a) and second spring (60b). The first fulcrum (61) is provided at the tip of the first spring (60a), and the second fulcrum (62) is provided at the tip of the second spring (60b), and the pressure force is transmitted by means of this first fulcrum (61) and second fulcrum (62). In this structure, the first spring (60a) and the second spring (60b) are provided in the form of Belleville springs. Figure 3.B presents a simplified representational section view showing the load device (60)-pressure plate (50)-friction element (41) relationship for the second embodiment of the torque limiter (1) and a representational surface pressure graphic of the pressure generated by the said relationship between the pressure plate (50) and the friction element (41). The pressure is higher in those regions where the first fulcrum (61) and the second fulcrum (62) contact the pressure plate (50) than in other regions of the pressure plate (50).

The first spring and the second spring have cone shapes oriented in two opposite directions.

In a third embodiment of the torque limiter (1) which is the subject of the invention, shown in Figure 4, the first spring (60a) and the second spring (60b) are fitted one inside the other, in the form of two Belleville springs. In the said embodiment, transmission of the pressure force to the pressure plate (50) is provided by means of the first fulcrum (61) and the second fulcrum (62) from multiple different points around the circumference of the first spring (60a) and the second spring (60b). It is ensured that at all of the points in areas of low pressure which developed as shown in Figure 1.A, force is applied at values equal or similar to the values applied at the points at which the first fulcrum (61) and second fulcrum (62) apply pressure. In this way, the ingress of external agents between the said pressure plate (50) and/or the second cover (80) and the friction element (41) is prevented.

Figure 4.B presents an isometric view of the first spring (60a). A second fulcrum (62) is provided in a continuous manner around the external circumference of the second spring (60b) shown in the figure. The support section (63) on the internal circumference of the second spring (60b) is provided in a non-continuous configuration. This non-continuous configuration is ensured by the fact that the support section (63) on the internal circumference is provided in notched form. Figure 4.C presents an isometric view of the second spring (60b). The first fulcrum (62) on the internal circumference of the first spring (60a) shown in the figure is provided in continuous form. The support section (63) which is provided on the external circumference of the first spring (60a) is provided in a non-continuous configuration. This non-continuous character is provided by the fact that the support section (63) on the internal circumference is provided in notched form.

Figure 4.A presents an isometric view of the first spring (60a) and the second spring (60b). The first fulcrum (61) and the second fulcrum (62) are oriented in the same direction. The internal diameter of the first spring (60a) is smaller than that of the second spring (60b). However, the support sections (63) of the first spring (60a) and the second spring (60b) are provided in non-continuous form throughout the external circumference of the first spring (60a) and the internal circumference of the second spring (60b). The support section (63) on the internal circumference of the second spring (60b) and the support section (63) on the external circumference of the first spring (60a) are both notched in structure and the notches therefore mesh with each other. As a result of this, the external diameter of the first spring (60a) is greater than the internal diameter of the second spring (60b). Thus, the first spring (60a) and the second spring (60b) fit into a smaller volume.

Figure 4.D shows the embodiment of the torque limiter (1) shown in Figure 4. It shows the load device (60)-pressure plate (50)-friction element (41) relationship. The dimensions defined in Figures 2.B and 3.B are also applicable for the embodiment shown in Figure 4.D. In addition to this, the radial distance between the contact circumferences of the support sections of the first spring (60a) and the second spring (60b) with the pressure plate (50) is defined as the support distance (d3).

In an alternative embodiment of the torque limiter (1) which is the subject of the invention shown in Figure 5, the first fulcrum (61) is positioned on the internal circumference of the first spring (60a) and the second fulcrum (62) is positioned on the internal circumference of the second spring (60b) with the support sections positioned on the external circumferences of each of the springs. Similarly, the first fulcrum (61) is provided at the tip of the first spring (60a), and the second fulcrum (62) is provided at the tip of the second spring (60b), and the pressure force is transmitted to the pressure plate (50) by means of the first fulcrum (61) and the second fulcrum (62). In this embodiment, the first spring (61) and the second spring (62) are oriented in the same direction, positioned in parallel in a section view comprising the axis of rotation of the torque limiter. Consequently, the external diameter of the torque limiter (1) is compactly structured while also distributing the pressure at near-similar values at a minimum of two points.

Any of the characteristics described above can also be applied to other embodiments.

The scope of protection of the invention is specified in the annexed claims, and may under no circumstances be restricted to the matters related in this detailed description for exemplary purposes only. This is because it is clear that a person skilled in the art will be able, in light of the above, to propose similar embodiments without going beyond the scope of the claims.

## Claims

1. Torque limiter (1) which is capable of turning on an axis of rotation (X) for use in motor vehicles in order to limit torque transmitted from an engine to a gearbox, comprising
a first cover (70),
a second cover (80) attached to the first cover (70), a drive plate (40) located axially between the first cover (70) and the second cover (80),
one of the first cover (70) or the drive plate (40) for attachment to the engine,
the other of the first cover (70) or the drive plate (40) for attachment to the gearbox input,
a load device (60) positioned axially between the first cover (70) and the drive plate (40),
a pressure plate (50) positioned axially between the load device (60) and the drive plate (40),
at least one friction element (41) positioned between the pressure plate (50) and the drive plate (40) **characterized in that**
the load device (60) comprises a first fulcrum (61) and a second fulcrum (62) which are in contact with a pressure plate (50),
at least one support section (63) between the first fulcrum (61) and the second fulcrum (62) which applies force to the first cover (70), and the first fulcrum (61) and the second fulcrum (62) being radially distanced from one another.

2. Torque limiter (1) according to Claim 1, **characterized in that** the first fulcrum (61) and the second fulcrum (62) are circumferential in configuration.

3. Torque limiter (1) according to Claim 1 **characterized in that** the first fulcrum (61) is provided circumferentially in a non-continuous configuration.

4. Torque limiter (1) according to Claim 3, **characterized in that** the second fulcrum (62) is provided circumferentially in a non-continuous configuration.

5. Torque limiter (1) according to Claim 1, **characterized in that** the section between the support section (63) of the load device (60) and the first fulcrum (61) is provided in the form of a Belleville spring.

6. Torque limiter (1) according to Claim 1, **characterized in that** the section between the support section (63) of the load device (60) and the second fulcrum (62) is provided in the form of a Belleville spring.

7. Torque limiter (1) according to any one of the previous claims, **characterized in that** the load device comprises two Belleville springs (60, 60b).

8. Torque limiter (1) according to claim 7, **characterized in that** the first fulcrum (61) and a first support section (63) are arranged on the first Belleville spring (60a), and the second fulcrum (62) and a second support section (63) are arranged on the second Belleville spring (60b), a radial support distance (d3) between the first and second support sections (63) of the first spring (60a) and the second spring (60b) being less than a radial distance (L) between the first fulcrum (61) and the second fulcrum (62).

9. Torque limiter (1) according to Claim 8, **characterized in that** the support sections (63) of the first spring (60a) and the second spring (60b) are provided circumferentially in a non-continuous configuration, and that the support sections fit together.

10. Torque limiter (1) according to Claim 8 or 9, **characterized in that** the support sections (63) of the first spring (60a) have a first group of teeth arranged circumferentially around the axis of rotation, and the second spring (60b) have a second group of teeth arranged circumferentially around the axis of rotation, each teeth of the first group of teeth being arranged circumferentially between two teeth of the second group of teeth.

11. Torque limiter (1) according to Claim 1, **characterized in that** it has a support section (63) which is circumferential in form, extending radially.

12. Torque limiter (1) according to Claim 11, **characterized in that** the load device (60), the support section (63), the first fulcrum (61), and the second fulcrum (62) are monolithic in structure, and the support section (63) which comes into contact with the first cover (70) is provided in a flattened form.

13. Torque limiter (1) according to any one of the previous claims, **characterized in that** the friction element (41) is provided circumferentially, the first fulcrum (61) being provided at the inner circumference of the load device, a first distance (d1) being defined between the internal circumference of the friction element (41) and the first fulcrum (61), and a friction surface width (B) being defined between the internal circumference of the friction element (41) and the external circumference of the friction element (41), the ratio of the first distance (d1) to the friction surface width (B) being equal to or less than 0.2.

14. Torque limiter (1) according to any one of the previous claims, **characterized in that** the friction element (41) is provided circumferentially, the second fulcrum (62) being provided on the external circumference of the load device, a second distance (d2) being defined between the external circumference of the friction element (41) and the second fulcrum (62), and a friction surface with (B) being defined between the internal circumference of the friction element (41) and the external circumference of the friction element (41), the ratio of the second distance (d2) to the width of the friction surface (B) being equal to or less than 0.2.

15. Torque limiter (1) according to any one of the previous claims, **characterized in that**, radial distance (L) being defined between the first fulcrum (61) and the second fulcrum (62), the friction element (41) being provided circumferentially, and friction surface width (B) being defined between the internal circumference of the friction element (41) and the external circumference of the friction element (41), the ratio of the radial distance (L) to the friction surface width (B) being equal to or greater than 0.7.

## Patentansprüche

1. Drehmomentbegrenzer (1), der um eine Drehachse (X) drehbar ist, zur Verwendung in Kraftfahrzeugen, um das durch einen Motor auf ein Getriebe übertragene Drehmoment zu begrenzen, umfassend:
eine erste Abdeckung (70),
eine zweite Abdeckung (80), die an der ersten Abdeckung (70) befestigt ist,
eine Antriebsplatte (40), die axial zwischen der ersten Abdeckung (70) und der zweiten Abdeckung (80) positioniert ist,
wobei eines der ersten Abdeckung (70) oder der Antriebsplatte (40) zur Befestigung am Motor ausgelegt ist,
wobei das andere der ersten Abdeckung (70) oder der Antriebsplatte (40) zur Befestigung am Getriebeeingang ausgelegt ist,
eine Lastvorrichtung (60), die axial zwischen der ersten Abdeckung (70) und der Antriebsplatte (40) positioniert ist,
eine Druckplatte (50), die axial zwischen der Lastvorrichtung (60) und der Antriebsplatte (40) positioniert ist,
mindestens ein Reibelement (41), das zwischen der Druckplatte (50) und der Antriebsplatte (40) positioniert ist,
**dadurch gekennzeichnet, dass**
die Lastvorrichtung (60) einen ersten Drehpunkt (61) und einen zweiten Drehpunkt (62) umfasst, die in Kontakt mit einer Druckplatte (50) stehen,
mindestens einen Stützabschnitt (63) zwischen dem ersten Drehpunkt (61) und dem zweiten Drehpunkt (62), der eine Kraft auf die erste Abdeckung (70) ausübt, und wobei der erste Drehpunkt (61) und der zweite Drehpunkt (62) radial voneinander beabstandet sind.

2. Drehmomentbegrenzer (1) nach Anspruch 1, **dadurch gekennzeichnet, dass** der erste Drehpunkt (61) und der zweite Drehpunkt (62) umlaufend ausgebildet sind.

3. Drehmomentbegrenzer (1) nach Anspruch 1, **dadurch gekennzeichnet, dass** der erste Drehpunkt (61) umfangsmäßig nicht durchgehend ausgebildet ist.

4. Drehmomentbegrenzer (1) nach Anspruch 3, **dadurch gekennzeichnet, dass** der zweite Drehpunkt (62) umfangsmäßig nicht durchgehend ausgebildet ist.

5. Drehmomentbegrenzer (1) nach Anspruch 1, **dadurch gekennzeichnet, dass** der Abschnitt zwischen dem Stützabschnitt (63) der Lastvorrichtung (60) und dem ersten Drehpunkt (61) in Form einer Tellerfeder ausgebildet ist.

6. Drehmomentbegrenzer (1) nach Anspruch 1, **dadurch gekennzeichnet, dass** der Abschnitt zwischen dem Stützabschnitt (63) der Lastvorrichtung (60) und dem zweiten Drehpunkt (62) in Form einer Tellerfeder ausgebildet ist.

7. Drehmomentbegrenzer (1) nach einem der vorhergehenden Ansprüche, **dadurch gekennzeichnet, dass** die Lastvorrichtung zwei Tellerfedern (60, 60b) umfasst.

8. Drehmomentbegrenzer (1) nach Anspruch 7, **dadurch gekennzeichnet, dass** der erste Drehpunkt (61) und ein erster Stützabschnitt (63) auf der ersten Tellerfeder (60a) angeordnet sind und der zweite Drehpunkt (62) und ein zweiter Stützabschnitt (63) auf der zweiten Tellerfeder (60b) angeordnet sind, wobei ein radialer Stützabstand (d3) zwischen dem ersten und dem zweiten Stützabschnitt (63) der ersten Feder (60a) und der zweiten Feder (60b) kleiner als ein radialer Abstand (L) zwischen dem ersten Drehpunkt (61) und dem zweiten Drehpunkt (62) ist.

9. Drehmomentbegrenzer (1) nach Anspruch 8, **dadurch gekennzeichnet, dass** die Stützabschnitte (63) der ersten Feder (60a) und der zweiten Feder (60b) umfangsmäßig nicht durchgehend ausgebildet sind und dass die Stützabschnitte zusammenpassen.

10. Drehmomentbegrenzer (1) nach Anspruch 8 oder 9, **dadurch gekennzeichnet, dass** die Stützabschnitte (63) der ersten Feder (60a) eine erste Gruppe von Zähnen aufweisen, die umfangsmäßig um die Drehachse angeordnet sind, und die zweite Feder (60b) eine zweite Gruppe von Zähnen aufweist, die umfangsmäßig um die Drehachse angeordnet sind, wobei jeder Zahn der ersten Gruppe von Zähnen umfangsmäßig zwischen zwei Zähnen der zweiten Gruppe von Zähnen positioniert ist.

11. Drehmomentbegrenzer (1) nach Anspruch 1, **dadurch gekennzeichnet, dass** er einen radial verlaufenden, umlaufenden Stützabschnitt (63) aufweist.

12. Drehmomentbegrenzer (1) nach Anspruch 11, **dadurch gekennzeichnet, dass** die Lastvorrichtung (60), der Stützabschnitt (63), der erste Drehpunkt (61) und der zweite Drehpunkt (62) einstückig ausgebildet sind, und der Stützabschnitt (63), der mit der ersten Abdeckung (70) in Kontakt kommt, abgeflacht ausgebildet ist.

13. Drehmomentbegrenzer (1) nach einem der vorhergehenden Ansprüche, **dadurch gekennzeichnet, dass** das Reibelement (41) umlaufend ausgebildet ist, wobei der erste Drehpunkt (61) am Innenumfang der Lastvorrichtung ausgebildet ist, ein erster Abstand (d1) zwischen dem Innenumfang des Reibelements (41) und dem ersten Drehpunkt (61) definiert ist und eine Reibflächenbreite (B) zwischen dem Innenumfang des Reibelements (41) und dem Außenumfang des Reibelements (41) definiert ist, wobei das Verhältnis des ersten Abstands (d1) zur Reibflächenbreite (B) gleich oder kleiner als 0,2 ist.

14. Drehmomentbegrenzer (1) nach einem der vorhergehenden Ansprüche, **dadurch gekennzeichnet, dass** das Reibelement (41) in Umfangsrichtung ausgebildet ist, wobei der zweite Drehpunkt (62) am Außenumfang der Lastvorrichtung ausgebildet ist, ein zweiter Abstand (d2) zwischen dem Außenumfang des Reibelements (41) und dem zweiten Drehpunkt (62) definiert ist und eine Reibflächenbreite (B) zwischen dem Innenumfang des Reibelements (41) und dem Außenumfang des Reibelements (41) definiert ist, wobei das Verhältnis des zweiten Abstands (d2) zur Reibflächenbreite (B) gleich oder kleiner als 0,2 ist.

15. Drehmomentbegrenzer (1) nach einem der vorhergehenden Ansprüche, **dadurch gekennzeichnet, dass** der radiale Abstand (L) zwischen dem ersten Drehpunkt (61) und dem zweiten Drehpunkt (62) definiert ist, wobei das Reibelement (41) umlaufend ausgebildet ist und eine Reibflächenbreite (B) zwischen dem Innenumfang des Reibelements (41) und dem Außenumfang des Reibelements (41) definiert ist, wobei das Verhältnis des radialen Abstands (L) zur Reibflächenbreite (B) gleich oder größer als 0,7 ist.

## Revendications

1. Limiteur de couple (1) qui est apte à tourner sur un axe de rotation (X) pour utilisation dans des véhicules automobiles afin de limiter le couple transmis d'un moteur à une boîte de vitesses, comprenant
un premier couvercle (70),
un deuxième couvercle (80) attaché au premier couvercle (70),
une plaque d'entraînement (40) située axialement entre le premier couvercle (70) et le deuxième couvercle (80), un élément parmi le premier couvercle (70) ou la plaque d'entraînement (40) étant destiné à être attaché au moteur,
l'autre élément parmi le premier couvercle (70) ou la plaque d'entraînement (40) étant destiné à être attaché à l'entrée de boîte de vitesses,
un dispositif de charge (60) positionné axialement entre le premier couvercle (70) et la plaque d'entraînement (40),
une plaque de pression (50) positionnée axialement entre le dispositif de charge (60) et la plaque d'entraînement (40),
au moins un élément de friction (41) positionné entre la plaque de pression (50) et la plaque d'entraînement (40) **caractérisé en ce que**
le dispositif de charge (60) comprend un premier point d'appui (61) et un deuxième point d'appui (62) qui sont en contact avec une plaque de pression (50),
au moins une section de support (63) entre le premier point d'appui (61) et le deuxième point d'appui (62) qui applique une force au premier couvercle (70), et le premier point d'appui (61) et le deuxième point d'appui (62) étant radialement à distance l'un de l'autre.

2. Limiteur de couple (1) selon la revendication 1, **caractérisé en ce que** le premier point d'appui (61) et le deuxième point d'appui (62) sont de configuration circonférentielle.

3. Limiteur de couple (1) selon la revendication 1, **caractérisé en ce que** le premier point d'appui (61) est prévu de manière circonférentielle dans une configuration non continue.

4. Limiteur de couple (1) selon la revendication 3, **caractérisé en ce que** le deuxième point d'appui (62) est prévu de manière circonférentielle dans une configuration non continue.

5. Limiteur de couple (1) selon la revendication 1, **caractérisé en ce que** la section entre la section de support (63) du dispositif de charge (60) et le premier point d'appui (61) est prévue sous la forme d'un ressort Belleville.

6. Limiteur de couple (1) selon la revendication 1, **caractérisé en ce que** la section entre la section de support (63) du dispositif de charge (60) et le deuxième point d'appui (62) est prévue sous la forme d'un ressort Belleville.

7. Limiteur de couple (1) selon l'une quelconque des revendications précédentes, **caractérisé en ce que** le dispositif de charge comprend deux ressorts Belleville (60, 60b).

8. Limiteur de couple (1) selon la revendication 7, **caractérisé en ce que** le premier point d'appui (61) et une première section de support (63) sont agencés sur le premier ressort Belleville (60a), et le deuxième point d'appui (62) et une deuxième section de support (63) sont agencés sur le deuxième ressort Belleville (60b), une distance de support radiale (d3) entre les première et deuxième sections de support (63) du premier ressort (60a) et du deuxième ressort (60b) étant inférieure à une distance radiale (L) entre le premier point d'appui (61) et le deuxième point d'appui (62).

9. Limiteur de couple (1) selon la revendication 8, **caractérisé en ce que** les sections de support (63) du premier ressort (60a) et du deuxième ressort (60b) sont prévues de manière circonférentielle dans une configuration non continue, et que les sections de support s'ajustent ensemble.

10. Limiteur de couple (1) selon la revendication 8 ou la revendication 9, **caractérisé en ce que** les sections de support (63) du premier ressort (60a) ont un premier groupe de dents agencées de manière circonférentielle autour de l'axe de rotation, et le deuxième ressort (60b) a un deuxième groupe de dents agencées de manière circonférentielle autour de l'axe de rotation, chaque dent du premier groupe de dents étant agencée de manière circonférentielle entre deux dents du deuxième groupe de dents.

11. Limiteur de couple (1) selon la revendication 1, **caractérisé en ce qu'**il a une section de support (63) qui est de forme circonférentielle, s'étendant radialement.

12. Limiteur de couple (1) selon la revendication 11, **caractérisé en ce que** le dispositif de charge (60), la section de support (63), le premier point d'appui (61), et le deuxième point d'appui (62) ont une structure monolithique, et la section de support (63) qui vient en contact avec le premier couvercle (70) est prévue sous une forme aplatie.

13. Limiteur de couple (1) selon l'une quelconque des revendications précédentes, **caractérisé en ce que** l'élément de friction (41) est prévu de manière circonférentielle, le premier point d'appui (61) étant prévu au niveau de la circonférence interne du dispositif de charge, une première distance (d1) étant définie entre la circonférence intérieure de l'élément de friction (41) et le premier point d'appui (61), et une largeur de surface de friction (B) étant définie entre la circonférence intérieure de l'élément de friction (41) et la circonférence extérieure de l'élément de friction (41), le rapport de la première distance (d1) à la largeur de surface de friction (B) étant égal ou inférieur à 0,2.

14. Limiteur de couple (1) selon l'une quelconque des revendications précédentes, **caractérisé en ce que** l'élément de friction (41) est prévu de manière circonférentielle, le deuxième point d'appui (62) étant prévu sur la circonférence extérieure du dispositif de charge, une deuxième distance (d2) étant définie entre la circonférence extérieure de l'élément de friction (41) et le deuxième point d'appui (62), et une surface de friction avec (B) étant définie entre la circonférence intérieure de l'élément de friction (41) et la circonférence extérieure de l'élément de friction (41), le rapport de la deuxième distance (d2) à la largeur de la surface de friction (B) étant égal ou inférieur à 0,2.

15. Limiteur de couple (1) selon l'une quelconque des revendications précédentes, **caractérisé en ce que**, la distance radiale (L) étant définie entre le premier point d'appui (61) et le deuxième point d'appui (62), l'élément de friction (41) étant prévu de manière circonférentielle, et la largeur de surface de friction (B) étant définie entre la circonférence intérieure de l'élément de friction (41) et la circonférence extérieure de l'élément de friction (41), le rapport de la distance radiale (L) à la largeur de surface de friction (B) étant égal ou supérieur à 0,7.
